# EUROPÄISCHE PATENTANMELDUNG

(11) **EP 2 071 223 A1**
(43) Veröffentlichungstag der Anmeldung: **17.06.2009**
(21) Anmeldenummer: 08105952.9
(22) Anmeldetag: 08.12.2008
(51) Int. Cl.: F16L 37/00, F24H 9/12

(54) **Befestigungsvorrichtung und Verfahren zum Anschluss hydraulischer Leitungen**

(30) Priorität: 12.12.2007 AT 20122007
(71) Anmelder: Vaillant GmbH, 42859 Remscheid (DE)
(72) Erfinder: Haack, Christian, 44388, Dortmund (DE); Hiegemann, Markus, 44791, Bochum (DE); Menne, Peter, 42897, Remscheid (DE); Raeck, Udo, 50259, Pulheim (DE)
(74) Vertreter: Hocker, Thomas

(57) **Zusammenfassung**

Befestigungsvorrichtung und Verfahren zum Anschluss hydraulischer Leitungen in einer Aufnahme mithilfe der Befestigungsvorrichtung, bei der mindestens eine hydraulische Leitung (1) über ein Anschlussstück (4) verfügt, wobei das Anschlussstück (4) in Leitungsrichtung eine Einschnürung (5) zwischen zwei Erweiterungen (6,7) aufweist, wobei die vordere Erweiterung (6) mit der Leitung endet, wobei zumindest bezüglich einer Richtung senkrecht der Leitungsrichtung die Breite d der Einschnürung (5) kleiner als die Breite D, D* der beiden Erweiterungen (6,7) ist, dass die Aufnahme (2) über eine schlüsselförmige Öffnung (9) verfügt, die schlüsselförmige Öffnung (9) eine Aussparung (10) besitzt, die mindestens so groß wie der Querschnitt der vorderen Erweiterung (6) ist, und sich hieran ein Schlitz (11) anschließt, dessen Breite zumindest annähernd der Breite d der Einschnürung (5) entspricht. Die vordere Erweiterung (6) des Anschlussstücks (4) wird durch die Aussparung (10) und anschließend die Einschnürung (5) in den Schlitz (11) geschoben, und dann über die Aufnahme (2) wird ein Fixierungsblech (3) mit einer im Wesentlichen gleichartigen schlüsselförmigen Öffnung (9') winkelversetzt befestigt, wobei zunächst die vordere Erweiterung (6) des Anschlussstücks (4) durch die Aussparung (10') der Öffnung im Fixierblech (3) und anschließend die Einschnürung (5) in den Schlitz (11') der Öffnung im Fixierblech (3) geschoben wird.

## Beschreibung

Die Erfindung bezieht sich auf eine Befestigungsvorrichtung und ein Verfahren zum Anschluss hydraulischer Leitungen in einer Aufnahme vorzugsweise eines Gerätes im Bereich der Sanitär- und Heizungstechnik.

Aus dem Stand der Technik ist bekannt, flexible hydraulische Leitungen beispielsweise bei Wärmepumpen zwischen dem Verdampfer/Kondensator und dem bauseitigen Anschluss zur Wärmequelle bzw. Heizungsanlage einzusetzen. Solche hydraulische Leitungen werden entweder an der Anschlussseite außerhalb des Gerätes angebracht oder sind in diesem integriert. Im letzten Fall ragen die vorgesehenen Anschlüsse aus der Wärmepumpe ohne eine Fixierung im Gehäuse heraus. Dabei besteht die Gefahr bei der Montage, dass die Anschlüsse aufgrund des hohen Drehmoments verdreht und beschädigt werden. Um eine solche Torsion der Anschlüsse zu vermeiden, müssen bei der Montage aufwendige Gegenmaßnahmen getroffen werden, z.B. Verwendung von Anschlusszubehör oder bauseitige Bögen. Weiterhin muss der direkte Kontakt zum Gehäuse bei einer thermischen Entkopplung wegen entstehender Kondensatbildung vermieden werden oder durch kraftschlüssig wirkende Kälteschellen mit geringer Wärmeleitfähigkeit reduziert werden.

Das deutsche Patent 199 23 777 C2 betrifft eine Anschlussvorrichtung zur Verwendung für den geräteinternen Anschluss von Rohrleitungen innerhalb eines Heizgerätes für den Heizkreislauf und/oder für Kalt- und/oder Warmwasserleitungen. Bei dieser Anschlussvorrichtung ist ein Anschlussstück mit einer Blech-/Kunststoffplatte derart verbindbar, dass ein Verbindungsabschnitt bajonettartig axial in eine schlüssellochartig ausgebildete Montageöffnung einsetzbar und durch eine seitliche Verschiebung mit einer Haltenut in einem verengten Öffnungsbereich mit dem Öffnungsrand der Montageöffnung in Eingriff bringbar ist.

Der Erfindung liegt die Aufgabe zugrunde, eine Befestigungsvorrichtung und ein Verfahren zum Anschluss hydraulischer Leitungen zur Verfügung zu stellen, wodurch eine einfache und kostengünstige Montage oder Austausch von hydraulischen Leitungen gewährleistet wird.

Erfindungsgemäß wird dies gemäß den Merkmalen des Anspruchs 1 mit einer Befestigungsvorrichtung zum Anschluss hydraulischer Leitungen in einer Aufnahme erreicht, bei der mindestens eine hydraulische Leitung über ein Anschlussstück verfügt. Das Anschlussstück weist in Leitungsrichtung eine Einschnürung zwischen zwei Erweiterungen auf, wobei die vordere Erweiterung mit der Leitung endet und zumindest bezüglich einer Richtung senkrecht der Leitungsrichtung die Breite d der Einschnürung kleiner als die Breite D, D* der beiden Erweiterungen ist. Die Aufnahme verfügt über eine schlüsselförmige Öffnung mit einer Aussparung, die mindestens so groß ist wie der Querschnitt der vorderen Erweiterung und sich hieran ein Schlitz anschließt, dessen Breite zumindest annähernd der Breite d der Einschnürung entspricht.

Gemäß den Merkmalen des abhängigen Anspruchs 2 ergibt sich der Vorteil, dass das Rohr bis zu einem Anschlag eingeschoben - und nicht hindurch geschoben - werden kann.

Gemäß den Merkmalen des abhängigen Anspruchs 3 ergibt sich der Vorteil, dass das Rohr bei runder Einschnürung kontinuierlich gedreht werden kann und bei mehreren in bestimmten Winkeln angeordneten parallelen Flächen der Einschnürung in diesen Winkelpositionen fixiert werden kann. Somit kann ein abgewinkeltes Rohr beispielsweise nach unten, oben, links oder rechts geführt werden.

Ferner wird ein Verfahren zur Befestigung eines hydraulischen Anschlusses mittels der erfindungsgemäßen Befestigungsvorrichtung beansprucht, das folgende Schritte aufweist:
- die vordere Erweiterung des Anschlussstücks wird durch die Aussparung und anschließend durch die Einschnürung in den Schlitz geschoben, und
- dann wird ein Fixierungsblech mit einer im Wesentlichen der schlüsselförmigen Öffnung gleichartigen schlüsselförmigen Öffnung über die vordere Erweiterung des Anschlussstücks geschoben,
- das Fixierblech ist derartig angeordnet, dass die schlüsselförmige Öffnung des Fixierblechs winkelversetzt zur schlüsselförmigen Öffnung der Aufnahme angeordnet ist und
- das Fixierblech wird derartig verschoben, dass die Einschnürung des Anschlussstücks in den Schlitz der Öffnung des Fixierblechs geschoben wird.
Vorteilhafte Ausgestaltungen ergeben sich durch die Merkmale der abhängigen Ansprüche.

Die Erfindung wird nun anhand der Figuren detailliert erläutert. Hierbei zeigen
Figur 1 einen schematischen Aufbau der Befestigungsvorrichtung,
Figur 2 eine Draufsicht des Anschlussstücks einer hydraulischen Leitung,
Figuren 3a bis d einzelne Schritte der Montage der Befestigungsvorrichtung und
Figuren 4 bis 6 ein wärmetechnisches Gerät mit alternativen hydraulischen Anschlüssen.

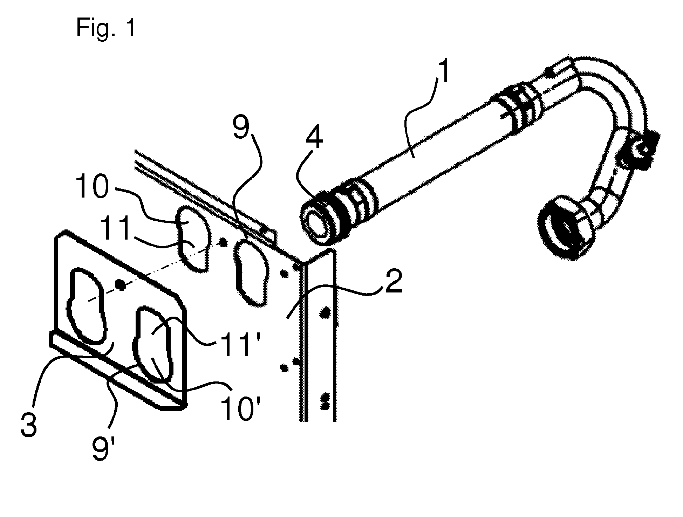

Figur 1 zeigt schematisch den Aufbau einer Befestigungsvorrichtung zum Anschluss einer hydraulischen Leitung 1 mit einem Anschlussstück 4 in einer Aufnahme 2 in der Rückwand eines wärmetechnischen Gerätes. Die Aufnahme 2 hat mindestens eine schlüsselförmige Öffnung 9 mit einer Aussparung 10 und einem Schlitz 11. Das Anschlussstück 4 wird durch die Aussparung 10 und anschließend durch den Schlitz 11 geschoben und über die Aufnahme 2 mit einem Fixierungsblech 3 mit einer im Wesentlichen gleichartigen schlüsselförmigen Öffnung 9' winkelversetzt befestigt.

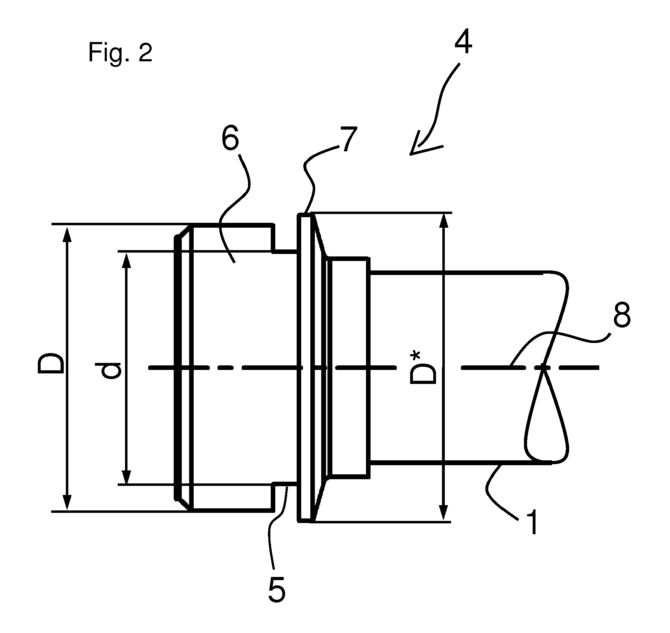

In Figur 2 ist der Aufbau des Anschlussstücks 4 vergrößert dargestellt. Dabei verfügt das Anschlussstück 4 in Leitungsrichtung 8 über eine Einschnürung 5 zwischen zwei Erweiterungen 6, 7, wobei die vordere Erweiterung 6 mit der Leitung 1 endet und zumindest bezüglich einer Richtung senkrecht der Leitungsrichtung 8 die Breite d der Einschnürung 5 kleiner als die Breite D, D* der beiden Erweiterungen 6, 7 ist. Die schlüsselförmige Öffnung 9 der Aufnahme 2 besitzt eine Aussparung 10, die mindestens so groß ist wie der Querschnitt der vorderen Erweiterung 6. Hieran schließt sich ein Schlitz 11 an, dessen Breite zumindest annähernd der Breite d der Einschnürung 5 entspricht.

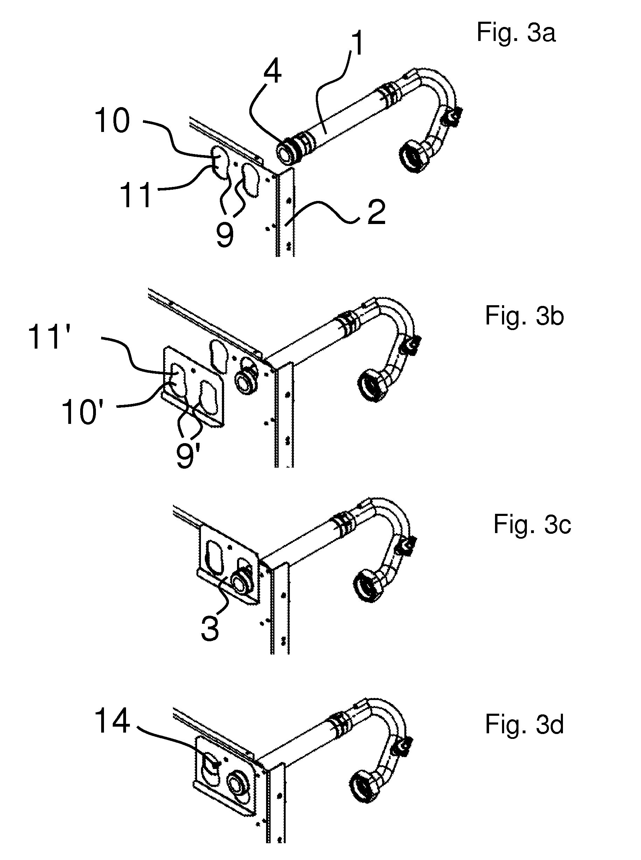

Wie in Figuren 3a bis d dargestellt, wird in einem ersten Schritt die vordere Erweiterung 6 des Anschlussstücks 4 durch eine Aussparung 10 einer Öffnung 9 der Aufnahme 2 und in einem zweiten Schritt in den Schlitz 11 der Öffnung 9 geschoben. In einem weiteren Schritt wird die Einschnürung 5 in den Schlitz 11' der Öffnung 9' im Fixierblech 3 und anschließend in die Aussparung 10' der Öffnung 9' geschoben. Danach wird das Fixierblech mit der Aufnahme 2 mithilfe von Befestigungsmitteln 14, beispielsweise durch Schrauben oder Nieten, gesichert.

Die erfindungsgemäße Befestigungsvorrichtung ermöglicht durch die Drehmomentaufnahme insbesondere eine torsionsbeständige Fixierung der Leitungen, so dass eine Gefahr der Beschädigung bei der Montage verhindert wird.

Durch die formschlüssige Verbindung existiert ein geringerer Kontakt zum Gehäuse als bei einer kraftschlüssigen Verbindung, so dass eine geringere Wärmebildung entstehen kann. Ein Kondensatanfall wird durch eine Isolierung, die vor Ort am Gerät angebracht wird und den direkten Kontaktbereich abdeckt, vermieden.

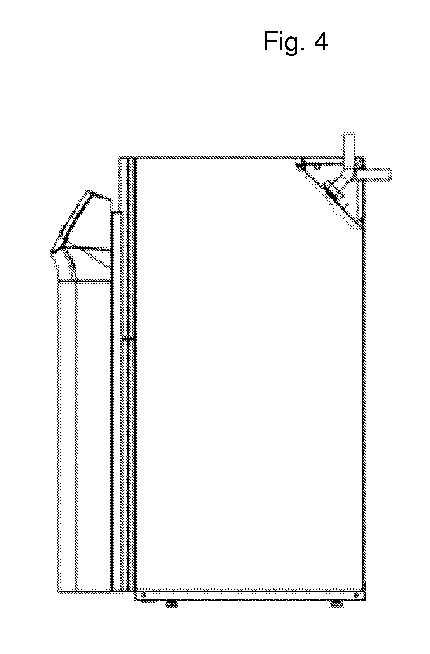

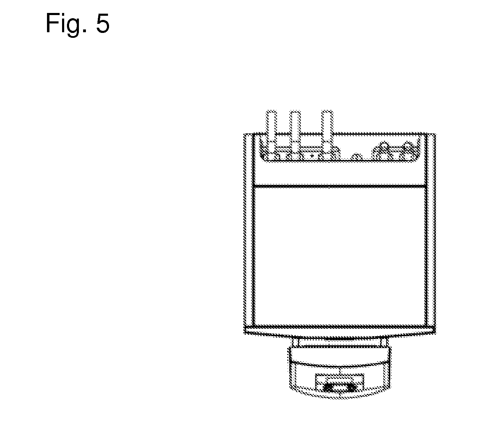

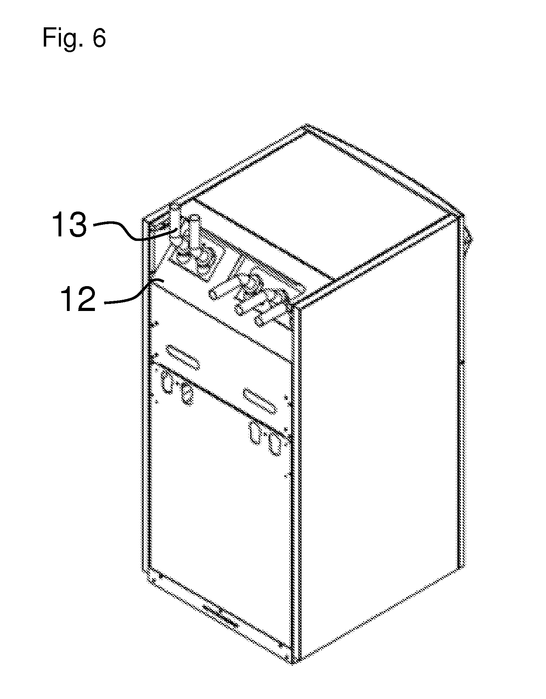

Figuren 4 bis 6 zeigen unterschiedliche Anordnungen von hydraulischen Anschlüssen. In Figur 6 sind die hydraulischen Anschlüsse vorzugsweise hinter einer 45° - abgeschrägten Verkleidung angebracht. Über verschraubte 45°-Rohrbögen wird eine besonders einfache Wahlausrichtung und somit einen variablen horizontalen oder vertikalen Anschluss für Heizungs- und Wärmequellenleitungen ermöglicht. Dies trägt zur Vereinfachung der Planung von Neuinstallationen sowie zur Erleichterung der Vorortmontage, in dem der Material- und Zeitaufwand bei der Installation des Gerätes reduziert wird ohne dass die Geräuschemissionen übermäßig ansteigen.

## Patentansprüche

1. Befestigungsvorrichtung zum Anschluss hydraulischer Leitungen (1) in einer Aufnahme (2), insbesondere eines wärmetechnischen Gerätes, **dadurch gekennzeichnet, dass** die mindestens eine hydraulische Leitung (1) über ein Anschlussstück (4) verfügt, wobei das Anschlussstück (4) in Leitungsrichtung (8) über eine Einschnürung (5) zwischen zwei Erweiterungen (6, 7) verfügt, wobei die vordere Erweiterung (6) mit der Leitung (1) endet, wobei zumindest bezüglich einer Richtung senkrecht der Leitungsrichtung (8) die Breite (d) der Einschnürung (5) kleiner als die Breite D, D* der beiden Erweiterungen (6, 7) ist, dass die Aufnahme (2) über eine schlüsselförmige Öffnung (9) verfügt, die schlüsselförmige Öffnung (9) eine Aussparung (10) besitzt, die mindestens so groß wie der Querschnitt der vorderen Erweiterung (6) ist und sich hieran ein Schlitz (11) anschließt, dessen Breite zumindest annähernd der Breite d der Einschnürung (5) entspricht.

2. Befestigungsvorrichtung zum Anschluss hydraulischer Leitungen (1) in einer Aufnahme (2) nach Anspruch 1, **dadurch gekennzeichnet, dass** die hintere Erweiterung (7) einen größeren Querschnitt aufweist als die Aussparung (10).

3. Befestigungsvorrichtung zum Anschluss hydraulischer Leitungen (1) in einer Aufnahme (2) nach Anspruch 1 oder 2, **dadurch gekennzeichnet, dass** die Einschnürung (5) über einen runden Umfang verfügt oder über mindestens zwei parallele Flächenpaare, deren Abstand zumindest der Breite des Schlitzes (11) entspricht, verfügt, wobei die Flächenpaare in einem bestimmten Winkel zueinander angeordnet sind.

4. Verfahren zur Befestigung eines hydraulischen Anschlusses mittels einer Befestigungsvorrichtung nach einem der Ansprüche 1 oder 2 mit folgenden Schritten:
• die vordere Erweiterung (6) des Anschlussstücks (4) wird durch die Aussparung (10) und anschließend die Einschnürung (5) in den Schlitz (11) geschoben,
• dann wird ein Fixierungsblech (3) mit einer im Wesentlichen der schlüsselförmigen Öffnung (9) gleichartigen schlüsselförmigen Öffnung (9') über die vordere Erweiterung (6) des Anschlussstücks (4) geschoben,
• das Fixierblech (3) wird derartig angeordnet, dass die schlüsselförmige Öffnung (9') des Fixierblechs (3) winkelversetzt zur schlüsselförmigen Öffnung (9) der Aufnahme (2) angeordnet ist und
• das Fixierblech (3) wird derartig verschoben, dass die Einschnürung (5) des Anschlussstücks (4) in den Schlitz (11') der Öffnung (9') des Fixierblechs (3) geschoben wird.

5. Verfahren zur Befestigung eines hydraulischen Anschlusses mittels einer Befestigungsvorrichtung nach Anspruch 2, **dadurch gekennzeichnet, dass** abschließend das Fixierblech (3) mit der Aufnahme (2) verschraubt oder vernietet wird.
